(19) Europäisches Patentamt
European Patent Office
Office européen des brevets

(11) Veröffentlichungsnummer: **0 010 121**
**B1**

(12) **EUROPÄISCHE PATENTSCHRIFT**

(45) Veröffentlichungstag der Patentschrift: **20.04.83**

(21) Anmeldenummer: **79102338.5**

(22) Anmeldetag: **09.07.79**

(51) Int. Cl.³: **F 16 S 1/00**, B 32 B 27/36, E 04 C 2/24, E 04 C 2/26, E 04 B 2/72

(54) **Vorgefertigte, selbsttragende Platten und Verfahren zu ihrer Herstellung.**

(30) Priorität: **13.07.78 IT 2565478**

(43) Veröffentlichungstag der Anmeldung:
**30.04.80 Patentblatt 80/9**

(45) Bekanntmachung des Hinweises auf die Patenterteilung:
**20.04.83 Patentblatt 83/16**

(84) Benannte Vertragsstaaten:
**AT BE CH FR GB SE**

(56) Entgegenhaltungen:
**AT - B - 301 814**
**DE - A - 1 659 019**
**DE - A - 2 049 144**
**DE - U - 1 852 948**
**DE - U - 1 979 293**
**DE - U - 7 035 394**

(73) Patentinhaber: **PANTEC S.r.l.**
**Via Costiera, 23**
**I-47100 Forli (IT)**

(72) Erfinder: **Peccenini, Paolo**
**Via Del Braldo, 20**
**Villagrappa (IT)**
Erfinder: **Romini, Paolo**
**Via Ugo Bassi, 7**
**Ravenna (IT)**

(74) Vertreter: **Racheli, Adele, Ing.**
**Via San Michele del Carso, 4**
**I-20144 Mailand (IT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 010 121 B1

Courier Press, Leamington Spa, England.

# Vorgefertigte, selbsttragende Platten und Verfahren zu ihrer Herstellung

Die Erfindung betrifft vorgefertigte, selbsttragende Platten aus wenigstens zwei äusseren Schichten und einer inneren Schicht, wobei die innere Schicht aus einer geschäumten Mischung besteht, sowie ein Verfahren zu deren Herstellung.

Die Anwendungsmöglichkeiten für Platten dieser Art, deren besondere Eigenschaften im folgenden noch beschrieben werden, reichen vom Bauwesen bis zur Inneneinrichtung, vom Ausfachen bis zum Verkleiden, vom Deckenbau bis zu tragenden Flachdächern, wobei in diesem Fall die Platten bereits mit einem Überzug versehen sind.

Derartige Platten bestehen im allgemeinen aus drei oder mehr Schichten, wobei die äusseren Schichten eine Schutzfunktion haben und der Platte ein gefälliges Äusseres verleihen sollen, während die innere Schicht oder die inneren Schichten dazu dienen, der Platte die vom jeweiligen Verwendungszweck abhängigen Grundeigenschaften zu geben. Bei bekannten Platten wird die Füllung oder der Kern, d.h. die Zwischenschicht bzw. die Zwischenschichten, im allgemeinen aus einer geschäumten Mischung hergestellt, währen die äusseren Schichten entweder aus Platten aus ungesättigtem Polyesterharz-Agglomerat, das mit Glasfasern verstärkt ist, oder aus Platten anderen Werkstoff, die gegebenenfalls in bekannter Weise verstärkt sein können, hergestellt werden, wobei die Werkstoffe für diese Schichten je nach dem Anwendungszweck der Platte ausgewählt werden.

Die bisher verwendeten Platten sind aussen mit Platten aus ungesättigtem Polyesterharz-Agglomerat oder einem anderen warmhärtenden Polyesterharz beschichtet, oder sie sind mit Schichten aus Marmor-oder Granitsplittern überzogen. Trotz zahlreicher Bemühungen ist es allerdings bis heute noch nicht gelungen, Platten grosser Abmessungen zu schaffen, die bei Stärken von weniger als 6 mm neben einem gefälligen Äusseren gute chemisch-physikalische Eigenschaften und eine annehmbare Massbeständigkeit aufweisen. Die Hauptmängel in ästhetischer Hinsicht bei bereits verwendeten Platten sind eine Feinporigkeit und Haarrisse in der Oberfläche aufgrund von Luftbläschen, wodurch de Oberfläche wegen der starken Wasserabsorption matt wird und dann, wenn diese Oberfläche eine transparente Gelschicht aufweist, durch Verwitterung vergilbt mit einer folgenden Farbveränderung, was besonders dall Fall ist, wenn heller Marmor oder heller Granit verwendet wird.

Ein weiteres Problem ist mit der Forderung nach absolut ebenen Platten verbunden. Um der Platte bessere mechanische Eigenschaften zu verleihen, werden Verstärkungen durch in Harz getränkte Glasfasern (Glasfaserkunststoff) vorgesehen; bei der Fertigung treten dabei allerdings Spannungen zwischen der Agglomeratplatte und der Verstärkung mit dem Glasfaserkunststoff auf, was ein Verziehen der versteiften und bisher ebenen Platte zur Folge hat.

In der AT—B—301 814 und der DE—A—2 049 144 sind Platten beschrieben, daren innere Schicht ausser der Schaumstruktur auch ein Füllmittel, insbesondere Blähton, enthält. Diese Zusätze dienen jedoch nur als einfaches Füllmittel.

Der Erfindung leigt die Aufgabe zurgrunde, Platten der eingangsgenannten Art bessere mechanische Eigenschaften zu verleihen, wobei auch Platten grosser Abmessungen nur vernachlässigbar kleine Verziehungen aufweisen sollen.

Diese Aufgabe wird erfindungsgemäss durch eine Platte und ein Verfahren gelöst, die in den Ansprüchen 1 und 6 beschrieben sind.

Andere vorteilhafte Einzelheiten sind in den Ansprüchen 2 bis 5 beschrieben.

Die funktionellen, organischen Silanderivate sind Bestandteile, die eine regelrechte "chemische Brücke" zwischen der ungesättigten Polyesterharz-Matrix und der Oberfläche der gekörnten Füllstoffe bilden, wenn sie mit einem Bestandteil von etwa 0,1 bis 5% dem ungesättigen Polyesterharz beigefügt werden. Diese Wirkung ergibt sich aufgrund eines bekannten Mechanismus, der jedoch zusammenfassend beschrieben werden soll.

Die allgemeine Strukturformel eines funktionellen, organischen Silanderivats ist die folgende:

$$X{-}(CH_2)_Y{-}Si{\equiv}(O{-}R)_3$$

X=funktionelle Gruppe
y=3

## Beispiel 1

Bestandteil I:

| | |
|---|---|
| Ungesättigtes Polyesterharz | 100 ppm |
| Wasser | 2—3,5 ppm |
| Dimethylanilin 15% | 0,5 ppm |
| Silikonstabilisator | 0,5 ppm |
| Antimontrioxid | 10 ppm |
| Hohlkügelchen $\phi$=150 Mikron ($\mu$m) | 10—20 ppm |
| funktionelles, organisches Silanderivat | 0,5—5 ppm |

Bestandteil II:

| | |
|---|---|
| MDI roh | 20—50 ppm |
| Benzolperoxid 50% | 1—4 ppm |
| keine körnigen Füllstoffe | |

Zusammensetzungen dieser Art sind verhältnissmässig einfach herzustellen; mit Hilfe eines kleinen, schnellen Mischers wird zunäschst der Bestandteil I und dann der Bestandteil II hergestellt. Anschliessend werden diese beiden Bestandteile rasch gemischt; da das Gemisch jetzt sehr fliessfähig ist, kann es in den zu füllenden Zwischenraum zwischen zwei Platten gegossen werden, die vorher in eine Form gebracht worden sind, die aus kristallinem Kunststoff besteht (z.B. Polyäthylen oder Polypropylen) und die in einer Presse oder in einer anderen Vorrichtung angeordnet ist, die den Druck aufnehmen kann, den das Material während der Expansion ausübt.

Etwa 10 bis 15 Minuten nach dem Giessen beginnt die Expansion, die nach bekannten chemischen Mechanismen abläuft. Die Enddichte der Masse beträgt etwa 200 kg/m$^3$. Die auf die maximale Expansion folgende Aushärtung tritt nach etwa 30 bis 40 Minuten ein.

Die mechanischen Eigenschaften des mit dem Silanbindemittel behandelten Schaumes sind besser als bei nicht behandeltem Material; eine Gegenüberstellung enthält die folgende Tabeille I.

TABELLE I

| Eigenschaften | nicht behaldelt | behandelt | Masseinheit |
|---|---|---|---|
| Bruchfestigkeit bei Druck | 5 | 10 | kg/cm$^2$ |
| maximale Stauchung | 2,5 | 1,5 | % |
| Druckelastizitätsmodul | 1500 | 2000 | kg/cm$^2$ |

Scheinbare Wärmeleitfähigkeit des Materials: 0,066 kcal/hm°C (0,276 kj/h m °C)

Beispiel II

Bestandteil I:

| | |
|---|---|
| Ungesättigtes Polyesterharz | 100 ppm |
| Wasser | 2—2,5 ppm |
| Dimethylanilin 15% | 0,5 ppm |
| Silikonstabilisator | 0,5 ppm |
| Antimontrioxid | 10 ppm |
| Hohlkügelchen $\phi$=150 Mikron ($\mu$m) | 5 ppm |
| funktionelles, organisches Silanderivat | 0,5—5 ppm |

Bestandteil II:

| | |
|---|---|
| MDI roh | 30—50 ppm |
| Benzolperoxid 50% | 1—4 ppm |

Der Zwischenraum zwischen den Platten wird vollkommen mit körnigem Blähton mit einer mittleren Korngrösse von 20 mm und einem spezifischen Gewicht von 350 kg/m$^3$ gefüllt. Nach den beim Beispiel I beschriebenen Arbeitsabläufen wird das Präparat auf die körnige Füllmasse gegossen, nachdem diese in den Zwischenraum zwischen den beiden Platten gebracht worden ist; die Fliessfähigkeit gestattet dabei der Flüssigkeit, durch die Zwischenräume zwischen den Körnern bis zum Boden der Form zu fliessen; anschliessend wird die Expansionsreacktion ausgelöst, und der noch flüssige Schaum erreicht die obere Kante der Form, wodurch er den gesamten freien Raum in dem Zwischenraum zwischen den beiden Platten ausfüllt.

Auch in diesem Fall ergibt sich eine fühlbare Verbesserung.

Das spezifische Gesamtgewicht beträgt etwa 500 kg/m$^3$, die scheinbare Wärmeleitfähigkeit ist 0,10 Kcal/hm°C. (0.418 kj/h m°C)

Die Gegenüberstellung zeigt Tabelle II.

TABELLE II

| Eigenschaften | nicht handelt | behandelt | Masseinheit |
|---|---|---|---|
| Bruchfestigkeit bei Druck | 15 | 25 | $kg/cm^2$ |
| Druckelastizitätsmodul | 1500 | 2500 | $kg/cm^2$ |
| Biegefestigkeit | 5 | 10 | $kg/cm^2$ |
| Biegeelastizitätsmodul | 1200 | 2000 | $kg/cm^2$ |

Es ergibt sich auch eine Verbesserung der Masshaltigkeit des Schaumes: eine auf zwei 60 cm voneinander beabstandeten Schneiden abgestützte Probe mit den Massen 70x15x10 cm, die einer mittig angreifenden, konstanten Biegebelastung entsprechend 50% der Biegefestigkeit (T=20°C, relative Feuchtigkeit=50%) ausgesetzt ist, weist nach etwa $10^4$ Stunden eine durch Kreichdehnung verursachte bleibende Verformung von etwa 1/10 mm auf.

Eine Technik, mit der dieselben Ergebnisse erzielt werden, mit der jedoch funktionelles, organisches Silanderivat eingespart werden kann, besteht darin, den körnigen, verstärkten Füllstoff vorzubehandeln.

Es ist nämlich möglich, eine wässrige Lösung des Silans mit einer von 0,1 bis 1% variablen Konzentration herzustellen; diese Lösung kann auf den körnigen Füllstoff gespritzt werden, oder der Füllstoff selbst kann in die Lösung eingetaucht werden.

Anschliessend wird der körnige Füllstoff getrocknet, worauf er mit dem Bindemittel auf der Basis von expandiertem, ungesättigtem Polyerterharz zu einem Agglomerat verarbeitet werden kann, wobei jedoch vermieden wird, der sich expandierenden Mischung das Silanbindemittel hinzuzufügen, das bereits auf der Oberfläche des körnigen Füllstoffes vorhanden ist.

Für die Erzeugung der Sandwich-Struktur werden sowohl Platten aus Kunstharzagglomerat und Korngemisch mit Glasfaserkunststoffverstärkung als auch Platten aus anderen Werkstoffen verwendet, beispielsweise Asbestzement, mit Karton verstärkter Gips, Holz, Regeneratholz (Dressspanplatten), Phenöl, Formaldehyd-Laminate, ABS (Acrylnitril-Butadien-Styrol), PS (Polystyrol), PMMA (Polymethylmethacrylat), Aluminium, Stahl und andere.

Eine bevorzugte Ausführung einer äusseren Platte aus Polyesterharz und Korngemisch wird in folgenden beschrieben.

Um die Verbindung zwischen dem ungesättigten Polyesterharz und dem Korngemisch zu verbessern, werden die funktionellen, organischen Silanderivate angewendet.

Das ungesättigte Polyesterharz, das aus den Harzen ausgewählt ist, deren Temperatur, bei der Wärmeverzug auftritt, sehr hoch ist, dem zur Beschleunigung Kobalt-Naphthenat oder -Octanoat zugesetzt wird und dem Bindemittel auf der Basis von funktionellem, organischem Silanderivat (von der Art der Vinylsilane oder Methacrylsilane) sowie flammhemmende und rauchhemmende Mittel (von der Art der Antiomonoxide und Zinkborat) zugesetzt werden, wird mit dem Katalysator gemischt (organisches Peroxid wie Methyläthylketonperoxid oder Acetylacetonperoxid oder Cyclohexanonperoxid) und anschliessend in die geöffnete Schalenform bis zu einer Dicke von etwa 3 bis 4 mm gegossen.

Unmittelbar im Anschluss an die vollständige Bedeckung des Bodens der Form durch das Kunstharz wird die körnige Masse gleichförmig darüber verteilt (vorzugsweise Granitsplitter, weil aufgrund des hohen Anteils an Kieselsäure der Silan-Bindeeffekt stärker ist) und zwar in einem Gewichtsverhältnis von etwa 200% bezüglich des Bindegemisches aus ungesättigtem Polyesterharz; die Korngrösse der Splitter beträgt etwa 1 bis 3 mm, und das körnige Gemisch erfährt sofort einen Trocknungs- und Entstaubungs-Prozess, so dass die Restfeuchtigkeit 1% nicht überschreitet und der Anteil an Körnchen, die kleiner als 1 mm sind, maximal 5% beträgt.

Dem in die Form eingeschütteten Korngemisch wird gleichzetig beim Einschütten eine bestimmte Menge kurzer Glasfasern (Länge 2 bis 3 mm) zugegeben, die von einer Schneidvorrichtung zugeführt wird, so dass auf 1 $m^2$ der Form etwa 250 g geschnittene Glasfasern kommen.

Aufgrund der Schwerkraft tauchen die Körner und die Fasern in den Kunstharz ein, während ein Vibrationssetzgerät für eine gute Verteilung sorgt und den Austritt von Luft begüngstigt, die möglicherweise im Kunstharz eingeschlossen war.

Das auf diese Weise geformte Laminat, das eine Dicke von etwa 5 bis 6 mm aufweist, wird bis zum vollständigen Schrumpfen aushärten gelassen. Die Aushärtung kann sowohl bei Umgebungstemperatur als auch in einem Ofen bei einer Temperatur von 80 bis 100°C vor sich gehen; erst nach dieser Phase können die notwendigen Glasfaserkunststoff-Versteifungen als imprägnierte Matten aufgebracht werden. Wenn die Verstärkung auf die darunterliegende Schicht irrtümlich aufgebracht würde, bevor deren Schrümpfungsprozess abgeschlossen ist, ergeben sich aufgrund der unterschiedlichen Schrumpfungskoeffizienten beim Aushärten Spannungen, die zu einer Wölbung der versteiften Platte führen würden.

Nachdem auch die Substanz, die die Versteifungsmatten imprägniert, vollständig ausgehärtet ist (entweder im Ofen oder bei Raumtemperatur, wobei sie sich auf diese Weise mit der Basisschicht verschweissen) kann das Werkstück bequem aus der Form genommen werden.

Zusammen mit dieser Entwicklung bezüglich der Materialien wurden auch die operativen Kriterien zur Lösung der oben angeführten Probleme dargelegt. Insbesondere wurde die Verwendung von Formen aus "kristallinen" Kunststofformen vorgeschlagen (Polyäthylen PE, Polypropylen PP), um ohne den Einsatz von Trennmitteln, die im übrigen teuer und wenig zuverlässig sind, die geformten Stücke aus der Form herauszulösen. Wie bekannt, ist es nicht möglich, Kunststoffe oder Klebstoffe jedweder Art auf diesen Werkstoffen zur Haftung zu bringen.

Die fehlerfreie Trennung ist eine unabdingbare Forderung, damit während der für ungesättigte Polyesterharze typischen Schrumpfungsphase ein Haftenbleiben auf der Oberfläche der Form vermieden wird. Derartige Formen erreichen erhebliche Ausmasse, wobei darauf hingewiesen werden kann, dass Formen von 20 m Länge und 3 m Breite bereits verwirklicht worden sind.

Aufgrund der Auswahl der beschriebenen, besonderen äussern Schicht kann derselbe, ungesättigte Polyesterharztyp sowohl für die äusseren Schichten als auch für die inneren Schichten verwendet werden, wodurch eine erhebliche Vereinfachung bei der Herstellung der erfindungsgemässen Platten und der Lagerung der notwendigen Rohstoffe erreicht wird. Allerdings können die äusseren Schichten auch anders sein. Wie auch der Typ der Platten ausgesucht wird, der die Verbundplatten nach aussen charakterisiert, wird diese Platte auf den Boden der Form gelegt, die aus "kristallinem" Kunststoff (PP, PE) besteht und eine Einfassung aufweist, deren Höhe der Stärke der fertigen Platte entspricht.

Sobald der körnige Füllstoff eingefüllt ist, wird die geschäumte Mischung hineingegossen, die die Hohlkügelchen aus Phylloalumosilikat und das funktionelle, organische Bindemittel, bestehend aus Vinylsilan oder Methacrylsilan mit einem Anteil zwischen 0,1 und 5% enthält, besteht; danach wird das Sandwich mit einer zweiten Schichtplatte geschlossen, die sich auf der erhöhten Einfassung der Form abstützt. Die gesamte Anordnung wird in eine Presse gegeben, die so dimensioniert ist, dass sie die bei der Expansion auftretenden Belastungen aufnehmen kann und in der die Anordnung bis zur vollständigen Vernetzung des Schaumes verbleibt. Bezüglich der Presserbauart soll angemerkt werden, dass für die industrielle Serienfertigung insbesondere eine Presse mit Luftpolster geeignet ist, auch wenn keine besondern Vorkehrungen unabdingbar sind.

Abschliessend ist anzuführen, dass dieselbe mit Füllstoffen versehene Mischung auch als Füllung nicht ebener Erzeugnisse verwendet werden kann, beispielsweise eingeschnittene Bleche oder dergleichen denn während der Expansion werden alle Bereiche eines Zwischenraumes von der Füllung betroffen, und zwar sowohl Zwischenräume mit konstantem als auch mit unregelmässigem Querschnitt.

Die fertige Platte kann an ihrem Aussenumfang von einem Rahmen umfasst sein, um dadurch die Montage und die Befestigung mit anderen Platten zur erleichtern. Der Rahmen wird dabei als Abstandselement zwischen die Schichten gesetzt und bestimmt auf diese Weise die Stärke der fertigen Platte. Vorzugsweise wird der Rahmen aus Eisenblech oder Aluminiumblech oder auch aus Kunststoff oder Holz hergestellt.

**Patentansprüche**

1. Vorgefertigte, als Verbundkörper ausgebildete, selbsttragende Platte aus wenigstens zwei äusseren Schichten und einer inneren Schicht, wobei die innere Schicht aus einer geschäumten Mischung besteht, dadurch gekennzeichnet, dass die innere Schicht aus einer verschäumten Mischung aus·

a. ungesättigten Polyesterharzen, die nach der Verschäumung ausgehärtet werden,
b. Hohlkügelchen aus Phylloalumosilikat mit einem mittleren Durchmesser von 150 $\mu$m und einer Dichte von 0,7 kg/dm$^3$ und/oder aus körnigem Material auf der Basis von Blähton mit einem mittleren Durchmesser zwischen 15 und 20 mm und einem spezifischen Gewicht von 0,35 kg/dm$^3$ sowie.
c. einem funktionellen, organischen Silanderivat besteht.

2. Platte nach Anspruch 1, dadurch gekennzeichnet, dass das organische Silanderivat (c) Vinylsilan und Methacrylsilan ist.

3. Platte nach Anspruch 1 oder 2, dadurch gekennzeichnet, dass als (b) Blähton mit einem mittleren Durchmesser von 20 mm, der mit einer wässrigen Lösung von 0,1 bis 1% Silan vorbehandelt und anschliessend getrocknet worden ist, verwendet ist.

4. Platte nach einem der vorhergehenden Ansprüche, dadurch gekennzeichnet, dass der Gewichtsanteil der Hohlkügelchen 5 bis 20% bezüglich der ungesättigten Polyesterharze beträgt,

während der Gewichtsanteil des Silanderivats zwischen 0,1 und 5% bezüglich der ungesättigten Polyesterharze beträgt.

5. Platte nach einem der Ansprüche 1 bis 3, dadurch gekennzeichnet, dass wenigstens eine der äusseren Schichten aus einer Mischung eines ungesättigten Polyesterharzes mit Granitsplittern und funktionellen, organischen Silanderivaten besteht.

6. Verfahren zur Herstellung einer Platte nach einem der Anspüche 1 bis 5, dadurch gekennzeichnet, dass man die ungesättigten Polyesterharze unter Zugabe eines funktionellen, organischen Silanderivats und der Hohlkügelchen aus Phylloalumosilikat mit einem mittleren Durchmesser von 150 $\mu$m und einer Dichte von 0,7 kg/dm$^3$ und/oder körnigem Material auf der Basis von Blähton mit einem mittleren Durchmesser zwischen 15 und 20 mm und einem spezifischen Gewicht von 0,35 kg/dm$^3$ zwischen die äusseren Schichten bringt und anschliessend die Masse in an sich gekannter Weise expandiert.

## Revendications

1. Panneau préfabriqué formé en tant que corps composite autoporteur à au moins deux couches extérieures et une couche intérieure, la couche intérieure étant constituée par un mélange en moussé, caractérisé en ce que la couche intérieure est constituée par un mélange sous forme de moussé contenant:

a) de résines polyester non saturées qui sont durcies après l'expansion;
b) des microsphères de phyllosilicate d'alumium ayant un diamètre moyen de 150 microns et une densité de 0,7 kg/dm$^3$ et/ou de matériau granuleaux à base d'argile expansée ayant un diamêtre moyen compris entre 15 et 20 mm. et un poids spécifique de 0,35 kg/dm$^3$, ainsi que
c) d'un dérivé de silane organique fonctionnel.

2. Panneau selon la revendication 1, caractérisé en ce que le dérivé de silane (c) organique est du vinylsilane et du métacrylsilane.

3. Panneau selon la revendication 1 ou 2, caractérisé en ce que, comme (b) on emploie de l'argile expansée ayant und diamètre moyen de 20 mm., prétraitée avec une solution aqueuse de 0,1 à 1% de silane; qui est ensuite.

4. Panneau selon l'une des revendications précédentes, caractérisé en ce que la partie en poids de microsphères creuses va de 5 à 20% par rapport aux résines polyester non saturées, tandis que la partie en poids du dérivé de silane est comprise entre 0,1 et 5% par rapport aux résines polyester non saturées.

5. Panneau selon l'une des revendications de 1 à 3, caractérisé en ce qu'au moins l'une des couches extérieures est constituée par un mélange d'une résine polyester non saturée avec des granulés de granit et dérivés de silane organiques-fonctionnels.

6. Procédé pour la fabrication d'un panneau selon l'une des revendications de 1 à 5, caractérisé en ce qu'on place entre des couches extérieures des résines polyester non saturées avec addition d'un dérivé de silane organique-fonctionnel et des microsphères de phyllosilicate d'aluminium ayant un diamètre moyen de 150 um et une densité de 0,7 kg/dm$^3$ et/ou de matières granuleuses à la base d'argile expansée ayant un diamètre moyen compris entre 15 et 20 mm. et un poids spécifique de 0,35 kg.dm$^3$; après quoi on fait expanser la masse d'une façon connue.

## Claims

1. A prefabricated self-supported panel configurated as a compound body having at least two outer layers and one inner layer, the inner layer comprising a foam-producing mixture, characterized in that the inner layer comprising a foam-producing mixture is made of:

(a) unsaturated polyester resins, which are hardened after expansion;
(b) microspheres of aluminum philosilicate having an average diameter of 150 $\mu$m and a density of 0.7 kg/dm$^3$ and/or granular material on the base of expanded clay having an average diameter of from 15 to 20 mm and a specific gravity of 0.35 kg/dm$^3$; as well as:
(c) an organo-functional silane derivative.

2. A panel according to Claim 1, characterized in that said organic silane derivative (c) is vinyl silane or metaacryl silane.

3. Apanel according to Claim 1, characterized in that expanded clay having an average diameter of 20 mm, is used for (b), which is pretreated with 0.11% aqueous silane solution, then dried.

4. A panel according to any of the preceding claims, characterized in that the parts by weight of the microspheres are from 5 to 20% with respect to the unsaturated polyester resins while the parts by weight of the silane derivative is from 0,1 to 5% with respect to the unsaturated polyester resins.

5. A panel according to Claims 1—3, characterized in that at least one of said outer layers

comprises a mixture of an unsaturated polyester resin and granite grit and derivatives of organo-functional silanes.

6. A process for the manufacture of a panel according to Claims 1—5, characterized in that the unsaturated polyester resins are poured between the outer layers with the addition of an organo-functional silane derivative and microspheres of aluminum philosilicate having an average diameter of 150 $\mu$m and a density of 0.7 kg/dm$^3$ and/or granular material on the base of expanded clay having an average diameter of from 15 to 20 mm and a specific gravity of 0.35 kg/dm$^3$, then the mass is expanded in a manner per se known.